Europäisches Patentamt

European Patent Office

Office européen des brevets

(11) Publication number: **0 168 191**
**A2**

# (12) EUROPEAN PATENT APPLICATION

(21) Application number: 85304462.6

(51) Int. Cl.⁴: **B 28 B 1/52**

(22) Date of filing: 21.06.85

(30) Priority: 06.07.84 GB 8417351

(43) Date of publication of application:
15.01.86 Bulletin 86/3

(84) Designated Contracting States:
AT BE CH DE FR GB IT LI LU NL SE

(71) Applicant: PILKINGTON BROTHERS P.L.C.
Prescot Road St. Helens
Merseyside, WA10 3TT(GB)

(72) Inventor: Greig, Ian Robert Kennedy
4 Cranwell Avenue Culcheth
Nr. Warrington Cheshire(GB)

(72) Inventor: Knowles, Rodney Peter
26 Arbury Avenue Blackbrook
St. Helens Merseyside(GB)

(72) Inventor: Pearson, Kenneth John
251 James Road
Rainhill Merseyside L35 OPF(GB)

(72) Inventor: Smith, James Watson
51b Trafalgar Road Birkdale
Southport Merseyside(GB)

(72) Inventor: Smith, Everard John
9 Ryder Crescent Aughton
Ormskirk Lancashire(GB)

(74) Representative: Sawers, Lawrence Peter et al,
PAGE, WHITE & FARRER 5 Plough Place New Fetter Lane
London EC4A 1HY(GB)

(54) Process for making cement composite materials.

(57) A process for making glass fibre reinforced cement composite material on a Hatschek machine comprises forming a dilute aqueous slurry of cement, glass fibre, pulverised fuel ash (p.f.a.), finely divided amorphous silica and cellulose pulp, the glass fibre being blended in after the other constituents, then incorporating a flocculant while feeding the slurry into a vat (57), depositing a web of cement, glass fibre, p.f.a., amorphous silica and cellulose pulp on a rotating foraminous cylindrical sieve (55) in the vat while agitating the slurry adjacent to the first submerged quadrant of the sieve, controlling the slurry temperature to be between 20°C and 25°C, and transferring the web from the sieve to a forming roll (64) on which a desired thickness of material is built up by superposition of successive layers of the web, and removing the multi-layer material from the forming roll for curing.

./...

Fig.1.

## PROCESS FOR MAKING CEMENT COMPOSITE MATERIALS

This invention relates to processes for making cement composite materials reinforced with glass fibres and is particularly concerned with processes for making such materials using a machine of the Hatschek type which was originally designed for production of asbestos cement sheets, i.e. sheets of cement composite material reinforced with asbestos fibres.

In the conventional Hatschek process as used for producing asbestos cement products, it is normal to use a dilute aqueous slurry of cement and asbestos fibres with a solids content of around of 6 to 10% by weight, from which a web of cement and asbestos fibres is deposited on the surface of a partially submerged rotating foraminous cylindrical sieve. The web is transferred from the part of the sieve which is emerging from the slurry to a forming roll, usually by means of a felt belt, and a desired thickness of material is built up on the forming roll by superposition of successive layers of the web. The multi-layer material is removed from the forming roll at intervals for dewatering and curing.

The replacement of asbestos by glass fibres has long been recognised to be desirable from the point of view of health, but it has been found to involve considerable process problems arising from the differences in behaviour between asbestos fibres and glass fibres, in particular the fact that glass fibres are not wetted by a conventional aqueous cement slurry and have a tendency to clump together, resulting in loss of fine cement particles when the material is de-watered and a non-homogeneous structure in the composite material. Furthermore, the glass fibres can be mechanically damaged during mixing of the aqueous cement slurry, or can be chemically attacked by the alkaline environment of the cement, with consequent loss of effectiveness as reinforcement in the final product. Considerable research has been devoted to these problems over the past 10 to 15 years, but prior proposals have generally adopted a piecemeal approach to the problems and have not generally resulted in products of adequate strength characteristics or density.

It is desirable that the glass fibre reinforced cement composite products should have similar characteristics to asbestos cement products made by the Hatschek process, namely a typical product density of the order of 1.4 g. $cm^{-3}$ and a minimum modulus of rupture of the order of 17N. $mm^{-2}$.

An object of the present invention has been to provide a process for making a cement composite material reinforced with glass fibres which takes account of all the factors necessary for production of a satisfactory material.

According to the present invention, a process for making a cement composite material reinforced with glass fibres comprises the steps of:-

(a)  forming a dilute aqueous slurry with a solids content of 6 to 10% by weight and comprising cement, glass fibre, pulverised fuel ash, finely divided amorphous silica and cellulose pulp, by a method in which the glass fibre is blended into the slurry after initial mixing of the other solid constituents with water,

(b)  incorporating a flocculant in the dilute aqueous slurry while feeding it into a vat containing a partially submerged rotating foraminous cylindrical sieve,

(c)  depositing a web of the cement, glass fibre, pulverised fuel ash, amorphous silica and cellulose pulp on the rotating sieve while agitating the slurry in the region of the vat adjacent to the first submerged quadrant of the sieve considered in relation to its direction of rotation,

(d)  controlling the temperature of the slurry which is fed into the vat so as to maintain the slurry temperature between 20°C and 25°C,

(e)  transferring the web from the part of the sieve which is emerging from the slurry to a forming roll and building up a desired
thickness of material by superposition of successive layers of
the web on the forming roll, and removing the multi-layer
material from the forming roll for curing.

The use of all of the steps set out above, in combination, has been
found necessary for the production of a satisfactory glass fibre
reinforced cement composite material on a Hatschek machine.

The blending of the glass fibre into the slurry after the initial
mixing of the cement and cellulose pulp with water is essential for
limiting mechanical damage to the glass fibres. In one method of
blending, a thick aqueous slurry is first formed containing the cement,
pulverised fuel ash, amorphous silica and cellulose pulp, with a solids
content of 40 to 60% by weight, the glass fibre is blended into the
thick slurry by a folding motion, and the thick slurry is diluted with
water, to form the dilute aqueous slurry. In another method, the
aqueous slurry is initially formed in the dilute condition and after
the initial mixing the glass fibre is blended into the slurry by use of
a mixer comprising an annular chamber which receives the slurry through
a tangential inlet, the inner wall of the chamber being substantially
lower than its outer wall, the mixer also having a downwardly tapering
conical outlet coaxial with the annular chamber which receives slurry
flowing over the top of the inner wall, the glass fibres being
introduced through an inlet disposed above the conical outlet so that
they fall into the slurry and are mixed with it as the slurry passes
down the conical outlet in a vortex motion. Such a mixer, or vortex
blender, is described and claimed in our European Patent Application
No. 83306218.5, published on 13th June 1984 under No. 0110530.

The agitation of the slurry in the region of the first submerged
quadrant of the the sieve is preferably effected by means of a series
of similar parallel blades disposed in vertical planes perpendicular to the axis of the sieve, spaced from one another across the width of the vat, and reciprocated parallel to the axis of the sieve. In this way, it is ensured that the glass fibres in the slurry where it is first deposited on the surface of the sieve are randomly aligned to a great extent and the excessive preferential alignment in the direction of rotation which can occur without such agitation is much reduced. This results in a much greater uniformity in strength characteristics in the longitudinal and transverse directions of the sheet subsequently produced.

The control of the temperature of the slurry is also found to be essential for obtaining a consistent product of the desired characteristics. Preferably the temperature of the slurry is controlled by sensing the temperature of the water in a reservoir from which water is drawn for making up the slurry or slurries and heating or cooling the water in the reservoir accordingly. For example, the water may be heated by steam introduced into the reservoir or cooled by circulating water from the reservoir to an external cooling lagoon.

The finely divided amorphous silica is preferably volatilised silica, which is a by-product formed in the electro-reduction process of producing silicon.

Preferably the glass fibre comprises chopped strands of an alkali-resistant glass fibre containing at least 6 mol. % (i.e. at least about 12 weight %) $ZrO_2$. The chopped strands are preferably such that they disperse into separate individual filaments in the slurry, but strands which retain their integrity may be used alternatively or in addition to the dispersible strands.

Before curing is completed, the cement composite material produced by the process of the invention may be formed into corrugated sheets, or wound on a mandrel to form pipes, in known manner. Alternatively it may be formed by hand into complex shapes.

A preferred embodiment of the invention will now be described in more detail by way of example and with reference to the accompanying drawings, in which:-

Figure 1 illustrates diagrammatically the layout of a Hatschek machine and the supply of the slurry thereto, and
Figure 2 is a diagrammatic cross-section of a blender for blending the glass fibre into the thick slurry.

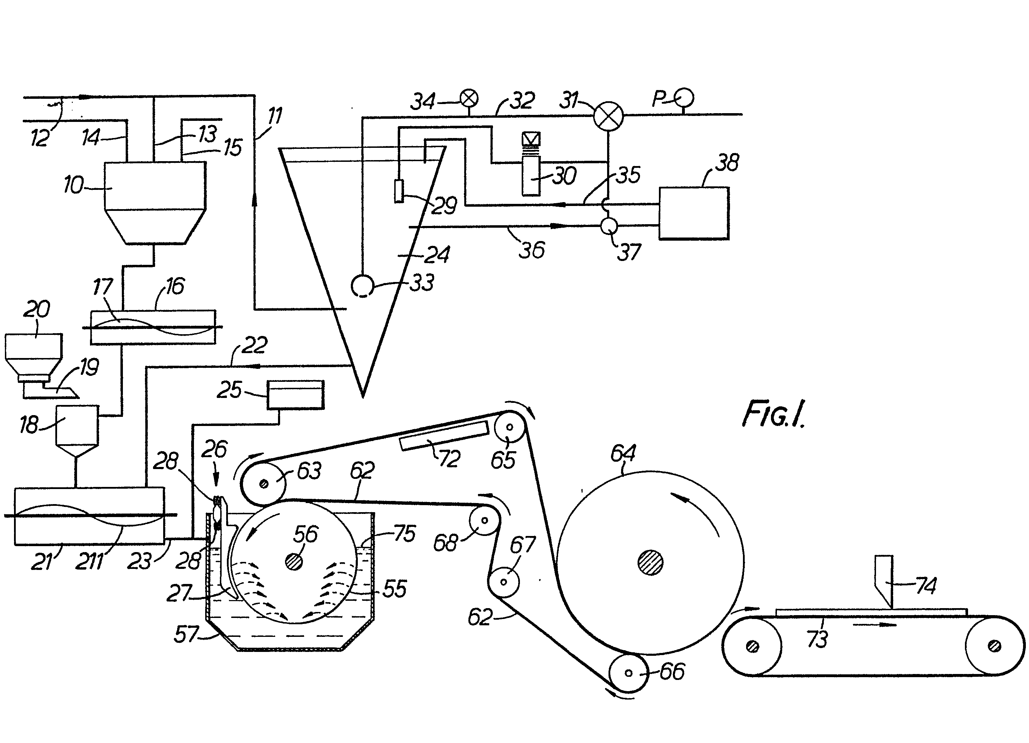

As shown in Figure 1, a conventional Hatschek-type machine comprises a horizontal, hollow wire mesh cylindrical sieve 55 mounted for anti-clockwise rotation about its cylindrical axis 56 in a slurry-containing vat 57.

Above the sieve 55 is a continuous moving woven felt 62 which is kept in firm contact with the sieve 55 by means of a rotatably mounted heavy roller 63 and is trained around further rollers 65, 66, 67, 68. The felt 62 passes from the sieve 55 to an accumulator roller 64 or forming roll on to which a film of slurry can be transferred as described below. The ends of the sieve 55 are fitted with seals (not shown) so that water from the slurry can only flow through the wire mesh and out through discharge ports mounted through the seals. In operation, the sieve 55 is rotated with a surface speed of the order of 45 metres/min. and a thin, even film of slurry is deposited on its wire mesh surface while the major part of the water is removed. The thickness of the film depends upon the slurry level in the vat 57, its consistency, and the speed of rotation of the sieve 55. Two or more vats 57 may be used, each containing a cylindrical sieve 55 in contact with the felt 62.

The thin film of glass fibre containing cement slurry which is collected on the wire mesh of the or each sieve 55 is transferred to the woven felt 62. The film is then processed in the same manner as is used in forming asbestos cement products by Hatschek machinery, by passing it over at least one vacuum box 72 which draws additional water from the film. The film is then passed under the iron or steel accumulator roller 64, further removal of water being caused by compression between rollers 64 and 66, and is transferred in a continuous operation to the accumulator roller 64 until a sheet is built up on the roller 64 to a desired thickness. The sheet can be knifed along a groove in the accumulator roller 64 and peeled from it on to a conveyor table 73, and subsequently trimmed and cut to desired lengths by saws 74..

The operation described so far is conventional for production of cement composite materials on a Hatschek machine.

The slurry for supply to the vat 57 is formed by first mixing a relatively thick slurry of cement, pulverised fuel ash, volatilised silica, cellulose pulp and water, with a solids content of 40 to 60%. The slurry is mixed in a high shear mixer 10 of conventional design, to which water and a supply of aqueous cellulose pulp are fed through lines 11, 12 and 13, while cement and pulverised fuel ash are supplied through line 14 and an aqueous slurry of volatilised silica is fed through line 15. If any solid processing additives are to be incorporated, they are dispersed in the cement/pulverised fuel ash mixture supplied through line 14. The resultant thick slurry is fed to an interim storage tank 16 where it is kept under agitation by means of a rotating mixer blade 17.

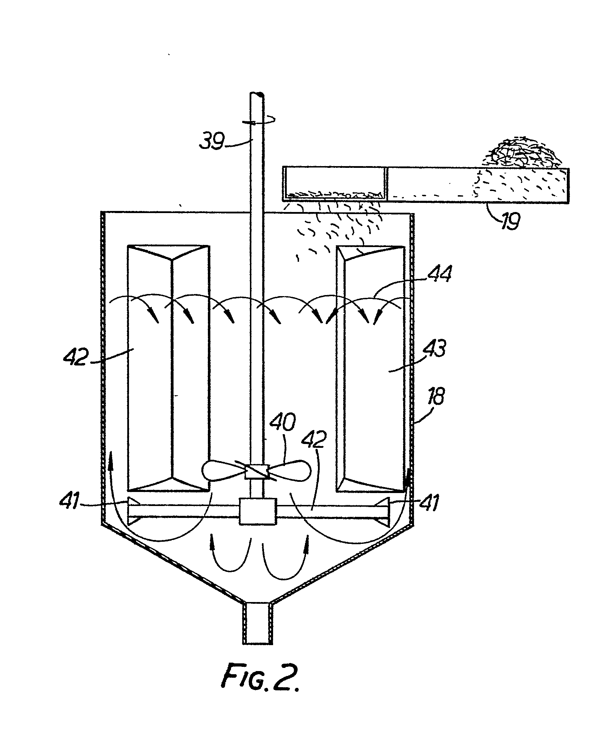

Alkali-resistant glass fibres, e.g. containing at least 6 mol % (at least about 12 weight %) $ZrO_2$ and preferably as described and claimed in our U.K. Patent Specification No. 1,290,528, are mixed into batches of the thick slurry in a blender 18 which is arranged to produce a rotary and vertical circulation of the slurry as shown in more detail in Figure 2, by means of a rotary agitator 39 carrying impeller blades
40 drawing the slurry downwards and tip blades 41 on the ends of a
horizontal bar 42 urging the slurry upwards. Stationary baffles 43
help to cause a folding motion on the surface of the slurry as
indicated by arrows 44. Such a blender is described in more detail and
claimed in our copending G.B. Application No. 8417352 filed 6th July
1984. The glass fibres are fed by a vibrating feeder 19 from a hopper
20 and folded into the slurry by the rotary and vertical circulation in
the blender 18.

The batches of thick fibre-containing slurry are transferred to a large
holding vessel 21 which contains a low shear rotary agitator 211 and in
which the slurry is diluted to a solids content of 6 to 10%, typically
7.5%, by weight, by water supplied through line 22. Line 22 receives
the dilution water from a main conical reservoir 24 which also supplies
the water through line 11 to the high shear mixer 10. The dilute
slurry is supplied from vessel 21 through line 23 to the or each vat
57. Flocculant from tank 25 is added to the slurry in line 23 so that
the flocculant is mixed into the slurry just before it passes into the
vat 57.

The vat 57 is provided with an agitator 26 in the form of a series of
similar parallel blades 27 (only one of which can be seen in Figure 1)
disposed in vertical planes perpendicular to the axis 56 of the sieve
55 and spaced from one another across the width of the vat. The blades
are mounted on wheels 28 so that they can be reciprocated parallel to
the axis of the sieve for producing the desired agitation of the slurry.

For controlling the temperature of the slurry, a sensor 29 is provided
in the conical reservoir 24 and connected to a thermostat device 30
which controls a valve 31 in a steam supply line 32 which has an outlet
33 in the reservoir 24. A non-return valve 34 is provided in a branch
pipe opening off the steam line 32 to vent the line 32 when the steam
supply is cut off.

For cooling the water in the reservoir 24 when necessary, inlet and outlet lines 35, 36 and a pump 37 are provided for circulating the water to an external cooling lagoon 38, again under the control of the thermostat device 30.

Specific examples of production of glass fibre reinforced cement composite materials on the apparatus illustrated in the drawings will now be described by way of example.

Example 1

The following constituents were mixed in the high shear agitator 10 for 4 minutes to produce the thick slurry before being transferred to the interim storage tank 16.

Ordinary Portland cement                                480 Kg

    size distribution - lower quartile 9 to 11 $\mu$

                       upper quartile 32 to 36$\mu$

  Blaine surface area 2900 $cm^2$/g

Pulverised fuel ash (sold as "Pozzolan" by           192 Kg

  Pozzolanic Ltd.)

  Loss on ignition   3.75%

  Residue on 150$\mu$ sieve 0.75%

     "    "   45$\mu$   "   6.75%

  Average density      2.3 g/$cm^3$

  Blaine surface area 3000 $cm^2$/g

Volatilised Silica (50% aqueous slurry)            128 Kg

  The dry material, sold under the Trade Mark

  ELKEM, is a by-product from the silicon

  electro-reduction process, generally

  containing at least 96% $SiO_2$, and with

  a surface area of approx. 20 $m^2$/g

  Size range: 80% particles less than 0.5$\mu$ diameter

| Cellulose pulp | 600 Kg |
|---|---|

(Kerayskuitu de-inked recycled ne, sprint
in water - consistency 4%, freeness value 45°SR)

| Water | 270 Kg |
|---|---|

| | 1670 Kg |
|---|---|

Batches of 300 litres of the thick slurry were transferred
in turn to the blender 18 and each batch was mixed with :-

| Glass fibre | 8.8 Kg |
|---|---|

Chopped multi-filament strands - sized with a
size composition designed to ensure that the
strands disperse or filamentise in the
slurry

Average diameter  $20\mu$

Lengths:  equal parts of 3 mm and 6 mm strands

Composition (weight %):

| | |
|---|---|
| $SiO_2$ | 62 |
| $ZrO_2$ | 16.7 |
| $Na_2O$ | 14.8 |
| $CaO$ | 5.6 |
| $Al_2O_3$ | 0.8 |
| $TiO_2$ | 0.1 |

The batches of thick slurry were fed into the holding vessel 21 and
diluted therein to a solids content of 7.5% to produce the dilute
aqueous slurry.

The dilute slurry was fed through line 23 to the vat 57 with the
addition of 1 part in 20 of an aqueous solution of flocculating agent,
namely an 0.05% by weight solution of "Magnafloc 1011", which is a high
molecular weight anionic polyacrylamide.  The flocculating agent is
added in order to reduce the losses of fine particles of solids through
the sieve 55.

The blades 27 were oscillated at a rate of 125 oscillations per minute.

The temperature of the water in the conical reservoir 24 was controlled to maintain the temperature of the dilute aqueous slurry at 23°C. The Hatschek machinery was operated as described above, using two vats 57 in series, to build up sheets of 6 mm thickness on the accumulator roller 64. After cutting and trimming the sheets 73, they were transferred to corrugating mechanism of the type conventional in the asbestos cement industry. The sheets were stacked, interleaved with corrugated forming sheets, and allowed to cure by the action of cement hydration for 12 hours, then separated from the formers and allowed to stand for 7 days. The corrugated sheets were then tested in accordance with British Standard BS4624. Prior to testing the sheets were given a 24 hour soak in water.

Corrugated sheets of 2 different profiles were produced in the foregoing manner, namely one type having a symmetrically corrugated profile with a pitch of 12 inches and a second type which is assymetrically corrugated and essentially comprises a flat sheet with ridge corrugations extending on one side only. The symmetrically corrugated sheets were used for the prescribed sheet tests, whereas flat tiles were cut from the flat portions of the assymetrically corrugated sheet for the prescribed tile tests.

Example 2     The same procedure was followed as in Example 1 except that the Kerayskuitu cellulose pulp was replaced by a bleached hardwood pulp sold as Celbi Eucalyptus pulp, with a freeness value of 53°SR

Example 3     The same procedure was followed as in Example 1 except that the Magnafloc 1011 flocculating agent was replaced by "Primal ASE 95", an anionic acrylic copolymer flocculating agent.

Example 4   The same procedure was followed as in Example 1 except that the glass fibre strands of 20 μ diameter and 3 mm and 6 mm length were replaced by strands of an average diameter of 16 μ of 3 mm length.

Results of sheet tests on the products of Examples 1 to 4 are set out in the following Table 1.

TABLE 1

Sheet tests according to BS 4624   Nominal thickness 6mm, 1100 mm span

| Example | Load bearing capacity N/m | Density g/cm3 | Actual thickness mm |
|---------|---------------------------|---------------|---------------------|
| 1 | 7448 | 1.45 | 6.2 |
| 2 | 5453 | 1.42 | 6.4 |
| 3 | 5676 | 1.38 | 5.83 |
| 4 | 7467 | 1.37 | 6.15 |

For the following Examples 5 to 8, the same procedure was followed as in Example 1, except that the glass fibre strands were of 20 μ average diameter and lengths of 3 mm, 6 mm and 9 mm in the ratio 1:2:1. To investigate the effect of the oscillation of the blades 27, the rate of oscillation was varied as follows:-

Example 5   Oscillation rate in both vats 150 oscillations per minute
Example 6   (Comparative Example) no oscillation
Example 7   Oscillation rate in both vats 35 oscillations per minute
Example 8   Oscillation rate in one vat 125 oscillations per minute and in the second vat 35 oscillations per minute.

The results of tile tests on the products of Examples 5 to 8 are set out in the following Table 2.

## TABLE 2

Tile tests          185 mm span          nominal thickness 6mm

| Example | MOR longitudinal N/mm2 | MOR transverse N/mm$^2$ | Mean MOR N/mm$^2$ | L/T | Density g/cm$^3$ | Mean Impact Strength Nmm/mm$^2$ |
|---|---|---|---|---|---|---|
| 5 | 21.5 | 13.8 | 17.7 | 1.56 | 1.39 | 3.7 |
| 6 | 26.4 | 10.2 | 18.3 | 2.59 | 1.42 | 4.1 |
| 7 | 24.3 | 10.6 | 17.5 | 2.29 | 1.52 | 6.6 |
| 8 | 25.9 | 14.7 | 20.3 | 1.76 | 1.44 | 5.8 |

MOR = Modulus of Rupture, tested in the longitudinal and
         transverse directions of the sheet L/T = Ratio of longitudinal to transverse values of MOR

It will be seen that the oscillation of the blades 27 is essential for the production of sheets of relatively uniform properties and that a fairly high rate of oscillation was important.

### Example 9

The same procedure was followed as in Example 1 except that the glass fibre was added directly to the diluted slurry in the mixer described in our European Patent Application 83306218.5, Publication No. 0110530, referred to above, and that the solids contents of the slurry were, in weight %:-

| | |
|---|---|
| Ordinary Portland cement (as in Example 1) | 58.4 |
| Pulverised fuel ash (as in Example 1) | 21.3 |
| Volatilised silica (as in Example 1) | 7.65 |
| Chopped glass fibre strands (dispersible) | 4.51 |

Average diameter 13 μ

Length 4.5 mm

Composition:  As in Example 1

Cellulose pulp                                         3.16

Unbleached softwood pulp refined

to 50⁰ SR, sold by Fincell under the

Trade Mark WISAKRAFT

Ball clay (sold by ECC International                   4.86

Ltd. under the Trade Mark HYMOD AT)

Sodium carboxymethylcellulose                          0.06

Flocculating agent (sold by Allied                     0.07

Colloids Ltd. under the Trade

Mark PERCOL 110L)

The ball clay and sodium carboxymethylcellulose were added to enhance the mouldability of the green (i.e. uncured) sheet.

The blades 27 were oscillated at 60 oscillations per minute.

The material produced was cured for 18 hours at a temperature in excess of 60⁰C and then stored for 7 days at ambient temperature. Tile tests produced the following results.

## TABLE 3

|                | Longitudinal | Transverse | Mean |
|----------------|--------------|------------|------|
| LOP N/mm2      | 11.5         | 10.1       | 10.8 |
| MOR N/mm$^2$   | 21.2         | 14.7       | 18.0 |
| Impact Nmm/mm2 | 8.6          | 5.5        | 7.1  |

Density 1.3 g.cm$^{-3}$

Example 10

The same procedure as in Example 9 was followed, except that the solids contents of the slurry were, in weight %:-

| | |
|---|---|
| Ordinary Portland cement (as in Example 1) | 59.4 |
| Pulverised fuel ash (as in Example 1) | 21.6 |
| Volatilised silica (as in Example 1) | 7.79 |
| Cellulose pulp | 3.20 |
| (Kerayskuitu de-inked recycled newsprint at $50^\circ$SR) | |
| Ball clay (as in Example 9) | 3.04 |
| Sodium carboxymethylcellulose | 0.03 |
| Flocculating agent (as in Example 9) | 0.04 |
| Chopped glass fibre strands (dispersible) | 4.58 |
| Average diameter $15\mu$ | |
| Length 4.5 mm | |
| Composition: As in Example 1 | |

The plates 27 were oscillated at 60 oscillations per minute.

Tile tests on the material produced the following results:

TABLE 4

| | Longitudinal | Transverse |
|---|---|---|
| LOP N/mm$^2$ | 11.9 | 10.6 |
| MOR N/mm$^2$ | 21.3 | 15.4 |
| Impact Nmm/mm$^2$ | 7.6 | 4.8 |

Density 1.34 g.cm$^{-3}$

Example 11

Again the procedure was as described in Example 9, except that the solids contents of the slurry were, in weight %:-

| | |
|---|---|
| Ordinary Portland cement (as in Example 1) | 60.0 |
| Pulverised fuel ash (as in Example 1) | 23.9 |
| Volatilised silica (as in Example 1) | 5.87 |
| Cellulose pulp<br>(Kerayskuitu pulp at 52oSR) | 2.18 |
| Fibrillated polypropylene fibre supplied as PULPEX P by<br>Lextar V.O.F. of Rotterdam | 0.25 |
| Ball clay (sold by E.C.C. International Ltd.<br>under the Trade Mark HYPLAS 64) | 3.12 |
| Water-soluble polyethylene oxide resin sold as<br>Polyox WSR 205 by Union Carbide Ltd. | 0.05 |
| Flocculating agent (as in Example 9) | 0.04 |
| Chopped glass fibre strands (dispersible)<br>Average diameter: 16 μ<br>Length: equal parts of 3 mm, 6 mm and 9 mm<br>Composition: As in Example 1 | 4.59 |

The blades 27 were oscillated at 100 oscillations per minute.

The material produced was cured at temperatures of up to 78°C for 16 ½ hours.

Tile tests on the product gave the following results

## TABLE 5

| | Longitudinal | Transverse |
|---|---|---|
| LOP N/mm$^2$ | 14.4 | 11.2 |
| MOR N/mm$^2$ | 21.6 | 13.8 |
| Impact Nmm/mm$^2$ | 5.4 | 2.2 |

Density 1.59 g.cm$^{-3}$

CLAIMS

1.    A process for making a cement composite material reinforced with glass fibres, comprising the steps of forming a dilute aqueous slurry with a solids content of 6 to 10% by weight and comprising cement, glass fibre, pulverised fuel ash, finely divided amorphous silica and cellulose pulp, by a method in which the glass fibre is blended into the slurry after initial mixing of the other solid constituents with water, incorporating a flocculant in the dilute aqueous slurry while feeding it into a vat containing a partially submerged rotating foraminous cylindrical sieve, depositing a web of the cement, glass fibre, pulverised fuel ash, amorphous silica and cellulose pulp on the rotating sieve, transferring the web from the part of the sieve which is emerging from the slurry to a forming roll, building up a desired thickness of material by superposition of successive layers of the web on the forming roll, and removing the multi-layer material from the forming roll for curing, characterised by the steps of agitating the slurry in the region of the vat adjacent to the first submerged quadrant of the sieve considered in relation to its direction of rotation while deposition of the web is taking place, and controlling the temperature of the slurry which is fed into the vat so as to maintain the slurry temperature between 20°C and 25°C during deposition of the web.

2.    A process according to claim 1 characterised in that a thick aqueous slurry is first formed containing the cement, pulverised fuel ash, amorphous silica and cellulose pulp, with a solids content of 40 to 60% by weight, the glass fibre is blended into the thick slurry by a folding motion, and the thick slurry is diluted with water to form the dilute aqueous slurry.

3. A process according to claim 2 characterised in that the glass fibre is blended into the slurry using a blender which produces a rotary and vertical circulation of the slurry, so as to fold the fibre into the slurry.

4. A process according to claim 1 characterised in that the aqueous slurry is initially formed in the dilute condition and after the initial mixing the glass fibre is blended into the slurry by use of a mixer comprising an annular chamber which receives the slurry through a tangential inlet, the inner wall of the chamber being substantially lower than its outer wall, the mixer also having a downwardly tapering conical outlet coaxial with the annular chamber which receives slurry flowing over the top of the inner wall, the glass fibres being introduced through an inlet disposed over the conical outlet so that they fall into the slurry and are mixed with it as the slurry passes down the conical outlet in a vortex motion.

5. A process according to any one of the preceding claims characterised in that the slurry is agitated in the region of the first submerged quadrant of the sieve by means of a series of similar parallel blades disposed in vertical planes perpendicular to the axis of the sieve, spaced from one another across the width of the vat, and reciprocated parallel to the axis of the sieve.

6. A process according to any one of the preceding claims characterised in that the temperature of the slurry is controlled by sensing the temperature of the water in a reservoir from which water is drawn for making up the slurry or slurries and heating or cooling the water in the reservoir accordingly.

7. A process according to claim 6 characterised in that the water is heated by steam introduced into the reservoir or cooled by circulating water from the reservoir to an external cooling lagoon.

**0168191**

8.    A process according to any one of the preceding claims characterised in that the finely divided amorphous silica is volatilised silica.

9.    A process according to any one of the preceding claims characterised in that the glass fibre comprises chopped strands of an alkali-resistant glass fibre containing at least 6 mol. % (at least about 12 weight %) $ZrO_2$.

10.  A process according to claim 9 characterised in that the chopped strands disperse into separate individual filaments in the slurry.

11.   A cement composite material characterised in that it has been made by a process according to any one of the preceding claims.

FIG.2.